Europäisches Patentamt

European Patent Office

Office européen des brevets

(19)

(11) Numéro de publication : **0 126 692**
**B1**

(12) **FASCICULE DE BREVET EUROPÉEN**

(45) Date de publication du fascicule du brevet :
21.01.87

(51) Int. Cl.⁴ : **G 21 C 17/10**

(21) Numéro de dépôt : **84401036.3**

(22) Date de dépôt : **18.05.84**

(54) **Procédé de détection des variations de la réactivité du cœur d'un réacteur nucléaire à eau sous pression et dispositif de mise en œuvre de ce procédé.**

(30) Priorité : **19.05.83 FR 8308275**

(43) Date de publication de la demande :
**28.11.84 Bulletin 84/48**

(45) Mention de la délivrance du brevet :
**21.01.87 Bulletin 87/04**

(84) Etats contractants désignés :
**BE CH DE GB IT LI SE**

(56) Documents cités :
**FR-A- 1 509 052**
**FR-A- 1 585 672**
**FR-A- 2 395 572**

(73) Titulaire : **FRAMATOME ET CIE.**
**Tour Fiat 1, Place de la Coupole**
**F-92400 Courbevoie (FR)**

(72) Inventeur : **Leroy, Jean**
**91 avenue du Général Leclerc**
**F-91190 Gif-sur-Yvette (FR)**
Inventeur : **Ruiz, Pierre**
**15 avenue Georges Clémenceau**
**F-93150 Blanc Mesnil (FR)**

(74) Mandataire : **Lavoix, Jean et al**
**c/o Cabinet Lavoix 2, Place D'Estienne D'Orves**
**F-75441 Paris Cedex 09 (FR)**

EP 0 126 692 B1

## Description

La détection des variations de la réactivité du cœur d'un réacteur nucléaire à eau sous pression constitue l'un des moyens de contrôle du bon fonctionnement du réacteur.

On sait détecter les variations de la réactivité du combustible d'un réacteur à partir de la puissance du réacteur, cette puissance, que l'on peut mesurer, par exemple, à l'aide de chambres de flux extérieures au cœur, étant fonction de la réactivité du combustible.

Toutefois, en utilisant de tels procédés, on ne peut pas distinguer les variations de réactivité induites par les évolutions de la température moyenne du fluide primaire dans le cœur des variations de réactivité dues à une mauvaise position des grappes de contrôle, par exemple une chute intempestive de grappes. Or, il est très important de connaître les variations de réactivité propres aux grappes, car ces variations sont souvent très importantes et nécessitent une intervention rapide du personnel de surveillance. En outre, si l'on veut pouvoir agir le plus rapidement possible, il faut détecter très rapidement les variations de réactivité, même en période transitoire.

L'invention concerne donc un procédé de détection des variations de la réactivité du cœur d'un réacteur nucléaire à eau sous pression, à une ou plusieurs boucles de réfrigération, dues à un défaut de la position des grappes de contrôle du cœur.

Selon l'invention, on compare une valeur instantanée représentative de la réactivité du combustible calculée directement à partir de la puissance neutronique du cœur mesurée au moyen de chambres de mesure de flux neutronique extérieures au cœur, à une valeur instantanée représentative de la réactivité calculée à partir de la température moyenne instantanée dans le cœur et de la concentration moyenne en bore du fluide primaire qui traverse le cœur.

Dans un mode préféré, la valeur de la réactivité calculée directement à partir de la puissance neutronique du cœur est obtenue en résolvant les équations de la cinétique neutronique, reliant la puissance neutronique à la réactivité, et en corrigeant la valeur obtenue par ladite résolution, par un coefficient tenant compte de l'influence de l'effet Doppler.

De préférence, la température moyenne du fluide primaire dans le cœur est calculée à partir de la température moyenne, pour l'ensemble des boucles de réfrigération, du fluide primaire à l'entrée du cœur, et de la température moyenne du fluide primaire à la sortie du cœur, cette dernière étant calculée au moyen de la puissance thermique du cœur, du débit global du fluide primaire et de la température moyenne du fluide primaire mesurée à l'entrée du cœur.

L'invention concerne également un dispositif de mise en œuvre du procédé précité.

Selon l'invention, ce dispositif comporte :

— des moyens de mesure de la puissance neutronique du cœur, de la température moyenne du fluide primaire dans la branche froide et de la concentration en bore du fluide primaire pour l'ensemble des boucles de réfrigération, et du débit global du fluide primaire,

— des moyens de calcul de la réactivité à partir de la mesure de puissance neutronique, comprenant des moyens de résolution des équations de la cinétique neutronique et de correction de la valeur ainsi obtenue par un coefficient tenant compte de l'effet Doppler,

— des moyens de calcul du signal de température moyenne du fluide primaire à l'entrée du cœur, obtenu à partir du signal de température moyenne du fluide primaire dans la branche froide, modifié par un opérateur de décalage temporel correspondant au temps de transit moyen d'une molécule de fluide primaire du point de mesure de température branche froide à l'entrée du cœur et par un modèle ponctuel de transfert thermique du fluide primaire dans le cœur, correspondant au temps de transit d'une molécule de fluide primaire de l'entrée du cœur au centre du cœur,

— des moyens de calcul du signal de l'enthalpie à l'entrée du cœur, à partir du signal de température moyenne du fluide primaire à l'entrée du cœur,

— des moyens de calcul de la puissance thermique du cœur à partir de la puissance neutronique mesurée, au moyen d'un modèle ponctuel de transfert thermique entre le flux neutronique et le flux thermique du fluide primaire,

— des moyens de calcul du signal de l'élévation de l'enthalpie dans le cœur, par quotient du signal de la puissance thermique du cœur par le signal du débit global du fluide primaire, modifié par un modèle ponctuel de transfert thermique du fluide primaire dans le cœur, correspondant à la moitié du temps de transit moyen d'une molécule de fluide primaire pour traverser le cœur,

— des moyens de calcul du signal de l'enthalpie à la sortie du cœur, par sommation du signal de l'enthalpie à l'entrée du cœur et du signal de l'élévation d'enthalpie dans le cœur,

— des moyens de calcul du signal de la température moyenne, pour l'ensemble des boucles de réfrigération, à la sortie du cœur à partir du signal de l'enthalpie à la sortie du cœur,

— des moyens de calcul du signal de la température moyenne du fluide primaire dans le cœur à partir des signaux de température à l'entrée et à la sortie du cœur,

— des moyens de calcul d'un signal représentatif de la réactivité dans le cœur, à partir du signal de la température moyenne dans le cœur et d'un signal représentatif de la concentration en bore du fluide primaire,

— des moyens de comparaison du signal représentatif de la réactivité obtenue à partir de la puissance neutronique et du signal représentatif de la réactivité obtenu à partir de la température moyenne dans le cœur et de la concentration en bore du fluide primaire.

Dans un mode préférentiel, les signaux représentatifs de la réactivité sont constitués par les dérivées temporelles de la réactivité.

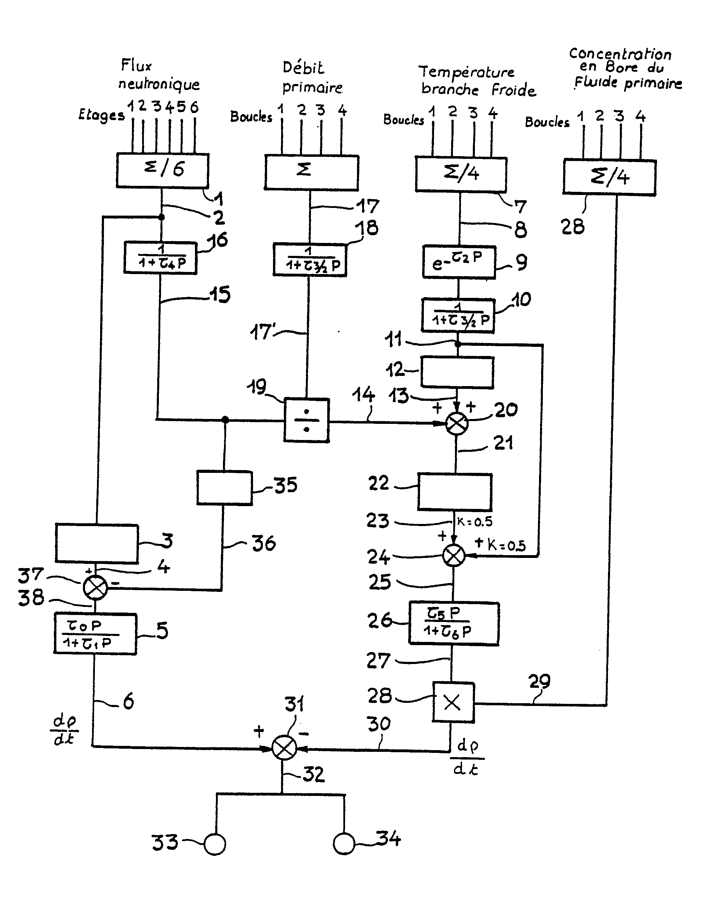

Afin d'être mieux comprise, l'invention va maintenant être décrite de façon plus précise en se reportant plus particulièrement à un mode préféré de réalisation de l'invention, illustré par la figure annexée.

La figure montre que l'on mesure quatre paramètres relatifs au fonctionnement du cœur et que l'on en déduit, au moyen d'un dispositif décrit ci-après, les variations de réactivité dues aux grappes.

Les mesures effectuées sont tout d'abord des mesures de flux neutronique effectuées de façon classique au moyen de quatre chambres de flux neutronique multi-étagées disposées à l'extérieur du cœur, chaque chambre mesurant le flux neutronique issu de l'un des quadrants du cœur. Dans l'exemple que nous allons décrire, on utilise quatre dispositifs selon l'invention, un dispositif étant associé à chacune des chambres multi-étagées. Ceci permet le contrôle de la réactivité même si l'un des quatre dispositifs s'avère défectueux ou est en cours de réparation. (On suppose ici une répartition symétrique de la puissance).

Un sommateur 1 permet d'obtenir, à partir des signaux de mesure de flux neutronique issus des différents étages (par exemple au nombre de six) de la chambre, un signal représentant la puissance neutronique moyenne du cœur, que l'on appellera par la suite de façon plus simple le signal de puissance neutronique, repéré par 2.

Ce signal 2 entre dans un module 3 qui calcule la réactivité du cœur, la puissance neutronique étant fonction de cette réactivité. Il est préférable d'utiliser une relation simple entre la puissance neutronique et la réactivité, en tenant compte par exemple d'un seul groupe moyen de neutrons retardés au cours de la réaction en chaîne qui a lieu dans le réacteur. L'inventeur a constaté qu'en réalisant cette simplification, il obtenait un résultat très satisfaisant ; c'est-à-dire que le dispositif selon l'invention, bien qu'utilisant une relation simplifiée entre la puissance neutronique et la réactivité, permettait d'atteindre le but visé par l'invention, à savoir, détecter de façon correcte et rapide les variations de réactivité afin de pouvoir intervenir à temps pour corriger ces variations.

Le signal 2 permet également de calculer la puissance thermique du cœur, que l'on repèrera par 15, au moyen d'un modèle ponctuel 16 de transfert thermique entre le flux neutronique et le flux thermique du fluide primaire. La fonction de transfert du modèle 16 est $1/1+\tau_4p$, $\tau_4$ représentant la constante de temps de transfert thermique et p la variable de Laplace.

Le signal de puissance thermique 15 entre dans un module 35 donnant un signal 36 qui est soustrait, dans un sommateur 37, du signal 4 de la réactivité globale issue du module 3. Le signal 36 est un signal de correction de la réactivité, tenant compte de l'influence de l'effet Doppler.

Le signal 38, obtenu à la sortie du sommateur 4, entre dans un module 5 qui calcule la dérivée dp/dt du signal 38. On repèrera ce signal par 6. On notera que la fonction du transfert du module 5, $\tau_0p/1+\tau_1p$, comporte outre le facteur $\tau_0p$ où $\tau_0$ est la constante de dérivation de la réactivité, un filtre $1/1+\tau_1p$ de type classique afin d'obtenir un signal 6 comportant le moins de parasites possible (p est bien sûr la variable de Laplace).

Alors que le signal 6 constitue un signal élaboré à partir du flux neutronique du réacteur, un autre signal représentant la réactivité du réacteur va être élaboré en fonction de la température moyenne du fluide primaire dans le cœur. Dans ce but, un module 7 effectue la moyenne des températures mesurées dans les branches froides de chacune des boucles de réfrigération, ici quatre. Le signal issu de ce module est repéré par 8. Comme les capteurs de température branche froide sont situés à une certaine distance de l'entrée du cœur, et non exactement à l'entrée du cœur, le signal 8 est modifié par un opérateur 9 (fonction de transfert $1^{-\tau_2p}$) de décalage temporel correspondant au temps de transit moyen $\tau_2$ d'une molécule de fluide primaire du point de mesure de température branche froide à l'entrée du cœur. Cet opérateur 9 est suivi d'un modèle ponctuel 10 de transfert thermique du fluide primaire dans le cœur correspondant au temps de transit $\tau_3/2$ d'une molécule de fluide primaire de l'entrée du cœur au centre du cœur (fonction de transfert : $1/1+(\tau_3/2)p$). On obtient à la sortie de ce modèle 10 un signal 11 correspondant à la température moyenne $\theta e$, pour l'ensemble des boucles, à l'entrée du cœur. Le signal 11 entre ensuite dans un opérateur 12 calculant la valeur de l'enthalpie moyenne à l'entrée du cœur. L'enthalpie est par exemple déterminée par un polynôme du second degré en $\theta e$. Pour obtenir une meilleure précision on peut aussi faire le calcul suivant un polynôme du troisième degré en $\theta e$. On obtient ainsi un signal 13 représentant l'enthalpie moyenne à l'entrée du cœur.

D'autre part, des moyens sont prévus pour calculer l'élévation d'enthalpie du fluide primaire pendant la traversée du cœur. Ce signal, que l'on repèrera par 14 est obtenu par quotient du signal 15 de la puissance thermique du cœur par le signal du débit global du fluide primaire. Le signal de débit global du fluide primaire est obtenu par sommation du débit du fluide primaire pour l'ensemble des boucles de réfrigération du réacteur, ici quatre, le signal de débit global 17 étant modifié par un modèle ponctuel 18 (fonction de transfert : $1/1+(\tau_3/2)p$) de transfert thermique du fluide primaire dans le cœur correspondant à la moitié du temps de transit moyen $\tau_3$ d'une molécule de fluide primaire pour traverser le cœur. On repèrera par 17' le signal de débit global modifié par le modèle 18. Les signaux 15, 17', 11 et 13 sont en phase.

L'opérateur 19 effectue le rapport du signal 17' par le signal 15 : on obtient un signal 14 représentant l'élévation d'enthalpie moyenne du fluide

primaire dans le cœur.

Les signaux 13 et 14 sont ensuite additionnés dans un sommateur 20, ce qui permet d'obtenir un signal 21 représentant l'enthalpie moyenne à la sortie du cœur. Un opérateur 22 déduit du signal 21 un signal 23 représentant la température moyenne de sortie du cœur. L'opérateur 22 utilise bien sûr la même relation entre l'enthalpie et la température que l'opérateur 12 précité, la température de sortie correspondant à la racine positive, dans le cas d'un polynôme du deuxième degré.

Les signaux 11 et 23 représentatifs de la température moyenne du fluide primaire à l'entrée et à la sortie du cœur entrent dans un sommateur 24 après avoir été affectés chacun d'un coefficient K égal à un demi. Le signal 25 issu du sommateur 24 est représentatif de la température moyenne du fluide primaire dans le cœur.

Un opérateur 26, de fonction de transfert $\tau_5 p/1+\tau_6 p$ (p étant la variable de Laplace), calcule à partir du signal 25 un signal 27 représentatif de la dérivée temporelle de la température moyenne du fluide primaire dans le cœur. $\tau_5$ représente la constante de dérivation et $\tau_6$ un filtre de réduction du gain transitoire de l'opérateur 26.

Un opérateur 28 effectue d'autre part la moyenne des mesures de concentration en bore du fluide primaire pour l'ensemble des boucles de réfrigération du réacteur. Le signal issu de l'opérateur 28 est repéré par 29. Comme la réactivité du réacteur est fonction de la température moyenne dans le cœur et de la concentration en bore, un opérateur 28′ recevant à son entrée les signaux 27 et 29 permet d'obtenir un signal 30 représentant la dérivée dp/dt de la réactivité dans le cœur.

Les signaux 6 et 30 sont comparés en 31. Quand le réacteur fonctionne normalement, les deux signaux s'annulent et le signal 32 issu du comparateur 31 est nul, mais, si le signal 32 atteint une certaine valeur, il est représentatif d'une anomalie résidant dans les grappes de contrôle, par exemple une chute incontrôlée de grappes. Le signal 32 entre dans deux relais à seuil 33 et 34, le relais 33 détectant les signaux 32 positifs et le relais 34 détectant les signaux 32 négatifs. On peut ainsi connaître le sens de la variation de la réactivité due aux grappes et intervenir de façon différente suivant que cette variation est positive ou négative : une variation positive peut nécessiter un arrêt d'urgence qui n'est bien sûr pas nécessaire dans le cas d'une variation négative.

Bien entendu l'invention n'est pas limitée au mode de réalisation qui a été décrit uniquement à titre d'exemple mais elle couvre également les autres modes de réalisation qui n'en différeraient que par des détails, par des variantes d'exécution ou par l'utilisation de moyens équivalents.

Ainsi, dans l'exemple décrit, on a comparé deux valeurs de la dérivée temporelle de la réactivité ; mais on pourrait également comparer directement deux valeurs de la réactivité en éliminant de façon classique la composante continue des signaux représentatifs de ces valeurs.

On pourrait aussi remplacer les modèles ponctuels 10 et 17 par d'autres modèles ponctuels jouant le même rôle ; ceux-ci pourraient par exemple être non linéaires.

On pourrait également mesurer directement la température moyenne du fluide primaire dans le cœur malgré les contraintes techniques que cela impose.

Dans tous les cas, les variantes possibles doivent être réalisées de façon à ce que tous les signaux soient en phase et que le dispositif soit ainsi valable non seulement en régime permanent mais aussi en régime transitoire ; c'est le cas pour le dispositif décrit à titre d'exemple et qui permet un contrôle très efficace des anomalies dues aux grappes.

**Revendications**

1. Procédé de détection des variations de la réactivité du cœur d'un réacteur nucléaire à eau sous pression, à une ou plusieurs boucles de réfrigération, dues à un défaut de la position des grappes de contrôle du cœur, caractérisé par le fait que l'on compare une valeur instantanée (6) représentative de la réactivité calculée directement à partir de la puissance neutronique du cœur (2) mesurée au moyen de chambres de mesure de flux neutronique extérieures au cœur, à une valeur instantanée (30) représentative de la réactivité calculée à partir de la température moyenne instantanée (25) dans le cœur et de la concentration moyenne (29) en bore du fluide primaire qui traverse le cœur.

2. Procédé selon la revendication 1, caractérisé par le fait que la valeur (6) de la réactivité calculée directement à partir de la puissance neutronique du cœur (2) est obtenue en résolvant les équations de la cinétique neutronique, reliant la puissance neutronique à la réactivité, et en corrigeant la valeur (4) obtenue par ladite résolution par un coefficient (36) tenant compte de l'influence de l'effet Doppler.

3. Procédé selon la revendication 1 ou 2, caractérisé par le fait que la température moyenne (25) du fluide primaire dans le cœur est calculée à partir de la température moyenne (8), pour l'ensemble des boucles de réfrigération, du fluide primaire à l'entrée du cœur, et la température moyenne (23) du fluide primaire à la sortie du cœur, cette dernière étant calculée au moyen de la puissance thermique (15) du cœur, du débit global du fluide primaire (17) et de la température moyenne du fluide primaire à l'entrée du cœur (8).

4. Dispositif de détection des variations de la réactivité du cœur d'un réacteur nucléaire à eau sous pression, à une ou plusieurs boucles de réfrigération, dues à un défaut de la position des grappes de contrôle du cœur, pour la mise en œuvre du procédé selon l'une des revendications 1 à 3, caractérisé par le fait qu'il comporte :

— des moyens de mesure de la puissance

neutronique du cœur, de la température moyenne du fluide primaire dans la branche froide et de la concentration en bore du fluide primaire pour l'ensemble des boucles de réfrigération, et du débit global du fluide primaire,

— des moyens de calcul (3) de la réactivité à partir de la mesure (2) de puissance neutronique, comprenant des moyens (3) de résolution des équations de la cinétique neutronique et de correction (37) de la valeur (4) ainsi obtenue par un coefficient (36) tenant compte de l'effet Doppler,

— des moyens (12) de calcul du signal (11) de température moyenne du fluide primaire à l'entrée du cœur, obtenu à partir du signal de la température moyenne (8) du fluide primaire dans la branche froide modifié par un opérateur (9) de décalage temporel correspondant au temps de transit moyen $\tau_2$ d'une molécule de fluide primaire du point de mesure de température branche froide à l'entrée du cœur et par un modèle ponctuel (10) de transfert thermique du fluide primaire dans le cœur, correspondant au temps de transit $\tau_3/2$ d'une molécule de fluide primaire de l'entrée du cœur au centre du cœur,

— des moyens de calcul du signal (13) de l'enthalpie à l'entrée du cœur, à partir du signal (11) de température moyenne du fluide primaire à l'entrée du cœur,

— des moyens de calcul de la puissance thermique (15) du cœur à partir de la puissance neutronique (2) mesurée, au moyen d'un modèle ponctuel (16) de transfert thermique entre le flux neutronique et le flux thermique du fluide primaire,

— des moyens de calcul (19) du signal (14) de l'élévation de l'enthalpie dans le cœur, par quotient du signal de la puissance thermique (15) du cœur par le signal (17) du débit global du fluide primaire, modifié par un modèle ponctuel (18) de transfert thermique du fluide primaire dans le cœur, correspondant à la moitié du temps de transit moyen $\tau_3$ d'une molécule de fluide primaire pour traverser le cœur,

— des moyens de calcul (22) du signal de l'enthalpie (23) à la sortie du cœur, par sommation du signal (13) de l'enthalpie à l'entrée du cœur et du signal (14) de l'élévation d'enthalpie dans le cœur,

— des moyens de calcul du signal (25) de la température moyenne, pour l'ensemble des boucles de réfrigération, à la sortie du cœur, à partir du signal (23) de l'enthalpie à la sortie du cœur,

— des moyens de calcul du signal (25) de la température moyenne du fluide primaire dans le cœur à partir des signaux (11) et (25) de température à l'entrée et à la sortie du cœur,

— des moyens de calcul (28) d'un signal (30) représentatif de la réactivité dans le cœur, à partir du signal (25) de la température moyenne dans le cœur et d'un signal (29) représentatif de la concentration en bore du fluide primaire,

— des moyens de comparaison du signal (6) représentatif de la réactivité obtenu à partir de la puissance neutronique (2) et du signal (30) représentatif de la réactivité obtenu à partir de la température moyenne (25) dans le cœur et de la concentration (29) en bore du fluide primaire.

5. Dispositif selon la revendication 4, caractérisé par le fait que les signaux représentatifs de la réactivité sont constitués par les dérivées temporelles de la réactivité.

**Claims**

1. Process for detecting the variations, due to a fault in the position of the core control clusters, in the reactivity of the core of a pressurized water nuclear reactor having one or more cooling loops, characterized by the fact that a momentary value (6) representing the reactivity calculated directly from the core neutron power (2) measured by means of neutron flux ex-core measuring chambers, is compared to a momentary value (30) representing the reactivity calculated from the momentary mean temperature (25) in the core and the mean boron concentration (29) in the primary fluid passing through the core.

2. The process as claimed in claim 1, characterized by the fact that the value (6) of the reactivity calculated directly from the neutron power of the core (2) is obtained by solving the neutron kinetics equations relating the neutron power to the reactivity, and by correcting the value (4) obtained from the said solution by a coefficient (36) which takes into account the influence of the Doppler effect.

3. The process as claimed in claim 1 or 2, characterized by the fact that the mean temperature (25) of the primary fluid in the core is calculated from the mean temperature (8), for the whole system of cooling loops, of the primary fluid at the entry of the core, and of the mean temperature (23) of the primary fluid at the exit from the core, the latter being calculated by means of the thermal power (15) of the core, of the overall throughput of the primary fluid (17) and of the mean temperature of the primary fluid at the entry to the core (8).

4. Device for detecting the variations, due to a fault in the position of the core control clusters, in the reactivity of the core of a pressurized water nuclear reactor having one or more cooling loops, for making use of the process as claimed in one of claims 1 to 3, characterized by the fact that it comprises :

— means for measuring the neutron power of the core, the mean temperature of the primary fluid in the cold branch and the boron concentration in the primary fluid for the whole of the cooling loops and the overall throughput of the primary fluid,

— means for calculating (3) the reactivity from the measurement (2) of neutron power, comprising means (3) for solving the neutron kinetics equations and for correcting (37) the value (4) thus obtained by a coefficient (36) taking account of the Doppler effect,

— means (12) for calculating the signal (11) of mean temperature of the primary fluid at the entry to the core, obtained from the signal of mean temperature (8) of the primary fluid in the cold branch, modified by an operator (9) of the time lag corresponding to the mean transit time $\tau_2$ of a molecule of primary fluid from the point of temperature measurement in the cold branch to the entry of the core and by a point model (10) of heat transfer of the primary fluid in the core, corresponding to the transit time $\tau_3/2$ of a molecule of primary fluid from the entry of the core to the center of the core,

— means for calculating the signal (13) of the enthalpy at the entry of the core from the signal (11) of mean temperature of the primary fluid at the entry of the core,

— means for calculating the thermal power (15) of the core from the measured neutron power (2), by means of a point model (16) of heat transfer between the neutron flux and the heat flux of the primary fluid,

— means for calculating (19) the signal (14) of the enthalpy rise in the core, from the quotient of the signal of the thermal power (15) of the core and the signal (17) of the overall throughput of primary fluid, modified by a point model (18) of heat transfer of the primary fluid in the core, corresponding to one half of the mean transit time $\tau_3$ of a molecule of primary fluid for passing through the core,

— means for calculating (22) the signal of the enthalpy (23) at the exit of the core, by summation of the signal (13) of the enthalpy at the entry of the core and of the signal (14) of the enthalpy rise in the core,

— means for calculating the signal (25) of the mean temperature, for the whole of the cooling loops, at the exit of the core, from the signal (23) of the enthalpy at the exit of the core,

— means for calculating the signal (25) of the mean temperature of the primary fluid in the core from the signals (11) and (25) of temperature at the entry and at the exit of the core,

— means for calculating (28) a signal (30) representing the reactivity in the core, from the signal (25) of the mean temperature in the core and from a signal (29) representing the boron concentration of the primary fluid,

— means for comparing the signal (6) representing the reactivity, obtained from the neutron power (2), to the signal (30) representing the reactivity, obtained from the mean temperature (25) in the core and from the boron concentration (29) in the primary fluid.

5. The device as claimed in claim 4, characterized by the fact that signals representing the reactivity consist of the time derivatives of the reactivity.

## Patentansprüche

1. Verfahren zur Erfassung von Reaktivitätsänderungen im Kern eines Druckwasserkernreaktors mit einer oder mehreren Kühlschleifen, aufgrund eines Fehlers in der Positionierung der Steuerstabbündel des Kerns, dadurch gekennzeichnet, daß ein Istwert (6), der repräsentativ für die Reaktivität ist und unmittelbar ausgehend von der Neutronenleistung des Kerns (2) berechnet ist, die wiederum mittels außerhalb der Kerns angeordneten Neutronenflußmeßkammern gemessen wird, mit einem Istwert (30) verglichen wird, der repräsentativ ist für die Reaktivität, die, ausgehend von der mittleren Isttemperatur (25) im Reaktorkern und der mittleren Borkonzentration (29) der Primärfluids, das den Kern durchströmt, berechnet ist.

2. Verfahren nach Anspruch 1, dadurch gekennzeichnet, daß der Wert (6) der direkt aus der Neutronenleistung des Kerns (2) berechneten Reaktivität erhalten wird, indem die Gleichungen der Neutronenkinetik aufgelöst werden, die die Neutronenleistung mit der Reaktivität in Verbindung bringen, und wobei der Wert (4), der durch die Auflösung erhalten wird, durch einen Koeffizienten (36) korrigiert wird, mit dem der Doppler-Effekt berücksichtigt wird.

3. Verfahren nach Anspruch 1 oder 2, dadurch gekennzeichnet, daß die mittlere Temperatur (25) des Primärfluids im Kern berechnet wird ausgehend von der mittleren Temperatur (8) der Gruppe der Kühlschleifen, des Primärfluids am Eingang des Reaktorkerns und der mittleren Temperatur (23) des Primärfluids am Ausgang des Kerns, wobei letztere Temperatur mittels der thermischen Leistung (15) des Kerns, dem globalen Durchsatz des Primärfluids (17) und der mittleren Temperatur des Primärfluids am Eingang des Kerns (8) berechnet wird.

4. Vorrichtung zur Erfassung von Änderungen der Reaktivität der Kerns eines Druckwasserkernreaktors mit einer oder mehreren Kühlschleifen, aufgrund eines Fehlers in der Positionierung der Kontrollstabbündel des Reaktorkerns und zur Durchführung des Verfahrens nach einem der Ansprüche 1 bis 3, gekennzeichnet durch

— Vorrichtungen zum Messen der Neutronenleistung des Kerns, der mittleren Temperatur des Primärfluids in dem kalten Zweig und Vorrichtungen zur Messung der Borkonzentration im Primärfluid für die Gesamtheit der Kühlschleifen und Vorrichtungen zur Messung des globalen Durchsatzes des Primärfluids,

— Mittel zum Berechnen (3) der Reaktivität, ausgehend von der Messung (2) der Neutronenleistung, mit Mitteln (3) zur Auflösung der neutronenkinetischen Gleichungen und zum Korrigieren (37) des so erhaltenen Werts mittels eines Koeffizienten, der den Doppler-Effekt berücksichtigt,

— Vorrichtung (12) zum Berechnen des Signals (11) der mittleren Temperatur des Primärfluids am Eingang des Kerns, der ausgehend von dem Signal der mittleren Temperatur (8) des Primärfluids in einem kalten Zweig erhalten wird, der mittels eines Zeitverschiebungsoperators (9) modifiziert wird, der der mittleren Übergangszeit $\tau_2$ eines Moleküls der Primärfluids des Meßpunktes der Temperatur des kalten Zweigs am Eingang des Reaktorkerns entspricht und durch ein punktuelles Modell (10) des Wärmetransports des Primärfluids im Kern, das der Übergangszeit $\tau_3/2$ eines Moleküls des Primärfluids vom Eingang des Kerns bis zu dessen Mitte entspricht,

— Mittel zum Berechnen des Signals (13) der Enthalpie am Eingang des Kerns, ausgehend von dem Signal (11) der mittleren Temperatur des Primärfluids am Eingang des Kerns,

— Mittel zum Berechnen der thermischen Leistung (15) des Kerns ausgehend von der gemessenen Neutronenleistung (2) mittels eines punktuellen Modells (16) des Wärmeübergangs zwischen dem Neutronenfluß und dem thermischen Fluß im Primärfluid,

— Mittel (19) zum Berechnen des Signals (14) der Erhöhung der Enthalpie im Kern mittels des Quotienten des Signals der thermischen Leistung (15) des Kerns und des Signals (17) des globalen Durchsatzes des Primärfluids, modifiziert durch ein punktuelles thermisches Übergangsmodell des Primärfluids in dem Kern, das der Hälfte der mittleren Übergangszeit eines Moleküls des Primärfluids zur Durchquerung des Kerns entspricht,

— Mittel (22) zum Berechnen des Signals der Enthalpie (23) am Ausgang des Kerns durch Aufsummierung des Signals (13) der Enthalpie am Eingang des Kerns und des Signals (14) der Erhöhung der Enthalpie im Kern,

— Mittel (25) zum Berechnen der mittleren Temperatur für die Gesamtheit der Kühlschleifen am Ausgang des Kerns, ausgehend von dem Signal (23) der Enthalpie am Ausgang des Kerns,

— Mittel (25) zum Berechnen des Signals der mittleren Temperatur des Primärfluids im Kern, ausgehend von Signalen (11) und (25) der Temperatur am Eingang und am Ausgang des Kerns,

— Mittel (28) zur Berechnung eines Signals (30), das repräsentativ ist für die Reaktivität im Kern, ausgehend von einem Signal (25) der mittleren Temperatur in Kern und einem Signal (29), das repräsentativ ist für die Borkonzentration im Primärfluid,

— Mittel (6) zum Vergleichen des Signals, das repräsentativ ist für die Reaktivität, die erhalten wurde ausgehend von der Neutronenleistung (2) und von dem Signal (30), das repräsentativ ist für die Reaktivität, die erhalten wird ausgehend von der mittleren Temperatur (25) im Kern und der Konzentration (29) des Bors im Primärfluid.

5. Vorrichtung nach Anspruch 4, dadurch gekennzeichnet, daß die Signale, die repräsentativ für die Reaktivität sind, aus zeitlichen Ableitungen der Reaktivität bestehen.